**Europäisches Patentamt**

**European Patent Office**

**Office européen des brevets**

(19)

(11) Veröffentlichungsnummer: **0 216 237**
**B1**

# (12) EUROPÄISCHE PATENTSCHRIFT

(45) Veröffentlichungstag der Patentschrift:
**27.12.90**

(21) Anmeldenummer: **86112404.8**

(22) Anmeldetag: **08.09.86**

(51) Int. Cl.⁵: **F25B 17/08**, F28D 20/00,
F24D 11/00

(54) **Diskontinuierlich arbeitende Sorptions-Speichervorrichtung mit Feststoffabsorber.**

(30) Priorität: **09.09.85 DE 3532093**

(43) Veröffentlichungstag der Anmeldung:
**01.04.87 Patentblatt 87/14**

(45) Bekanntmachung des Hinweises auf die Patenterteilung:
**27.12.90 Patentblatt 90/52**

(84) Benannte Vertragsstaaten:
**AT BE CH DE FR GB IT LI LU NL SE**

(56) Entgegenhaltungen:
**DE-A- 3 035 538**
**DE-A- 3 207 656**
**DE-A- 3 212 608**
**DE-C- 522 887**
**DE-C- 3 324 745**
**US-A- 4 044 819**

(73) Patentinhaber: **Januschkowetz, Gerhard, Dipl.-Phys.,
Amalienstrasse 77, D-8000 München 40(DE)**

(72) Erfinder: **Januschkowetz, Gerhard, Dipl.-Phys.,
Amalienstrasse 77, D-8000 München 40(DE)**

(74) Vertreter: **Weber, Joachim et al, Hoefer, Schmitz, Weber,
Patentanwälte Ludwig-Ganghofer-Strasse 20,
D-8022 Grünwald/München(DE)**

**Beschreibung**

Die Erfindung bezieht sich auf eine diskontinuierlich arbeitende Sorptions-Speichervorrichtung mit einem Feststoff als Sorptionsmittel. Die Grundbausteine einer derartigen Vorrichtung sind ein Speicher mit dem Feststoff als Sorptionsmittel sowie ein Verdampfer und ein Kondensator jeweils für das Arbeitsmittel. Das Arbeitsmittel (auch Kältemittel genannt) wird dabei zwischen den genannten drei Komponenten in einem druckfesten Kanalsystem geführt.

In neuerer Zeit hat man regelmäßig in diesem druckfesten Kanalsystem eine Ventil- und/oder Pumpeinrichtung zur Steuerung des diskontinuierlichen Betriebs des Arbeitsmittels eingebaut. Unabhängig davon, ob dieses druckfeste Kanalsystem mit Unterdruck oder Überdruck gegenüber der Atmosphäre betrieben wird, sind derartige Ventil- und/oder Pumpeinrichtungen kostenaufwendig und oft störanfällig und stellen eine mögliche Leckagequelle dar. Ein exemplarisches Beispiel für diese Art der Technik zeigt beispielsweise die DE-OS 3 207 656 (vgl. Bezugszeichen 13, 18, 19, 42 in Fig. 2) oder die EP-A2 0 026 257 (vgl. 382a, 390a, 388, 341, 386a in Fig. 3). Eine grundsätzliche Übersicht neuesten Datums über diese Technik vermittelt der Artikel "Zeolith-Wasser: Neues Stoffpaar für Wärmepumpen und Wärmespeicher", Zeitschrift CCI 2/1984. Eine grundsätzliche thermodynamische Funktionsbeschreibung gibt ferner der Artikel "Thermochemical Heat Storage and Heat Transformation with Zeolites as Absorbents" in Proc. IEA Conf. on New Energy Conservation Technologies and Their Commercialization, Berlin 6-10 April 1981, Ed. J.P. Millhone & E.H. Willis, Springer Verlag Berlin - Heidelberg - New York 1981, Vol. 1, S. 796.

Man hat bei dieser Art bekannter Vorrichtungen auch schon den Verdampfer und den Kondensator zu einer Verdampfer-Kondensator-Baueinheit zusammengefaßt (US-PS 4 250 720, Bezugszeichen 14), dabei jedoch weiterhin eine entsprechende Ventileinrichtung (Bezugszeichen 18, 19) in der strömungsmäßigen Verbindung zum Speicher (Bezugszeichen 16) verwendet. Eine Steuerung der Betriebsphasen kann hierbei zwar bei offener Ventileinrichtung bereits durch Zu- oder Abschaltung einer am Absorber/Desorber-Behälter angebrachten Heizquelle vorgenommen werden. Es kommt dabei jedoch zu einem zwangsläufigen Rückstrom des Arbeitsmitteldampfes, wenn man nicht die Ventileinrichtung im primären System zwischenzeitlich schließt. Eine exakte Steuerung der Betriebsphase ist daher nur mittels dieser im primären Kreislauf liegenden Ventileinrichtung möglich.

Ausgehend von der thermodynamischen Grundfunktion der genannten Komponenten hat man in der Frühgeschichte des Baus von Sorptions-Speichervorrichtungen auch bereits ständige Strömungsverbindungen zwischen dem Speicher einerseits sowie einem Verdampfer/Kondensator andererseits vorgesehen (in zeitlicher Reihenfolge beispielsweise US-Reissue-Patent 5 287 aus 1873, US-PS 992 560 aus 1911 und DE-PS 738 333 aus 1943 - im letzteren Fall Wasser als flüssige Sorptionsmittel mit Ammoniak als Arbeitsmittel, sonst Feststoff als Sorptionsmittel).

Diese technische Entwicklung endete praktisch in den vierziger Jahren und anfangs der fünfziger Jahre mit Sorptions-Speichervorrichtungen mit Feststoffabsorber gemäß z.B. der DE-PS 522 887 aus 1931, der DE-PS 722 164 aus 1942, der DE-PS 814 157 aus 1951 sowie der FR-PS 1 018 022 aus 1952. Alle diese vorbekannten Vorrichtungen besitzen einen Verdampfer/Kondensator. Sie leiden grundsätzlich darunter, daß sich das Sorptionsmittel sofort wieder mit Arbeitsmittel belädt, sobald die Wärmezufuhr in der Desorptionsphase abgebrochen wird. Eine Folge davon ist, daß man weder die nach der Zweckbestimmung zu erzeugende Kälte noch die bei den vorbekannten Vorrichtungen nur als Abwärme verwendete Wärme längerdauernd speichern kann. Verdampfer/Kondensatoren sind darüber hinaus an sich grundsätzlich nachteilig, weil in der Verdampfungsphase die spezifische Wärme des Verdampfer/Kondensators mitsamt dem enthaltenen Arbeitsmittel in einem ersten Schritt von der Kondensationstemperatur auf die Kühltemperatur gebracht werden muß. Dadurch geht dem Kälteverbraucher Kältekapazität verloren. Desgleichen muß in der Desorptionsphase der Verdampfer/Kondensator mit dem in ihm verbliebenen restlichen Arbeitsmittel auf die Kondensationstemperatur erwärmt werden, so daß diese Wärmekapazität einem etwaigen Wärmeverbraucher verlorengeht. Der letztere Aspekt ist bei den gattungsgemäßen Vorrichtungen allerdings sekundär, da entstehende Wärme nur als Abwärme vernichtet wurde. Jedenfalls ist grundsätzlich der Wirkungsgrad von Verdampfer/Kondensatoren kleiner als der gesonderter Verdampfer und Kondensatoren. Nachdem aus diesen Gründen die genannte alte Technik der kontinuierlichen Strömungsverbindung des Speichers mit dem Kondensator und dem Verdampfer sozusagen totgelaufen war, ist man dann zu der vorher erwähnten Ventilsteuerung übergegangen, mit der es sich verhindern läßt, daß in der Absorptionsphase Arbeitsmittel im Kondensator verdampft bzw. in der Desorptionsphase Arbeitsmittel im Verdampfer kondensiert.

Die Erfindung geht mit den Merkmalen des Oberbegriffs von Anspruch 1 von einer bekannten diskontinuierlich arbeitenden Sorptions-Speichervorrichtung mit einem Feststoff als Sorptionsmittel gemäß der DE-OS 3 212 608 aus. Bei dieser bekannten Vorrichtung werden die Betriebsphasen jedoch auch durch Steuerungsorgane, wie Steuerventile und Pumpen, im primären System des Arbeitsmittels gesteuert, so daß alle hiermit prinzipiell verbundenen Probleme der weiter oben geschilderten Art verbleiben.

Der Erfindung liegt die Aufgabe zugrunde, die mit den genannten Ventileinrichtungen im primären System verbundenen Probleme zu vermeiden und trotzdem Wärme oder Kälte oder beide längerdauernd speichern sowie die Betriebsphasen exakt steuern zu können.

Ausgehend von den Merkmalen des Oberbegriffs von Anspruch 1 wird diese Aufgabe nach der Erfindung durch die kennzeichnenden Merkmale von Anspruch 1 gelöst.

Überraschenderweise läßt sich nach der Erfindung die zugrundeliegende Aufgabe unter Anknüpfung an die erwähnte alte und dann aufgegebene Technik sogar mit sehr gutem Wirkungsgrad lösen. Die Speichermöglichkeiten ergeben sich aus der konsequenten Vermeidung von Wärmeabfluß aus den einzelnen Komponenten einschließlich der strömungsmäßigen Verbindung derselben. Die Betriebssteuerung des diskontinuierlichen Betriebs wird dabei nicht mehr durch das Arbeitsmittel im primären System steuernde Steuerorgane (Ventil- und/oder Pumpeinrichtungen) vorgenommen, sondern nur durch Steuerorgane sekundärer Wärmetauschfluide im sekundären System. Solche Steuerorgane im sekundären System sind kostengünstig und, schon wegen ihrer Betriebsweise etwa bei atmosphärischen Bedingungen, störungsunempfindlicher. Kostenintensive, störungsanfällige und Leckagequellen bildende Vakuumventile oder Umwälzeinrichtungen für das Arbeitsmittel können eingespart werden. Für die Steuerung der Wärmetauschfluide kann man in Großserie hergestellte Ventilmittel verwenden. Es ist schließlich nicht mehr erforderlich, daß der Feststoff des Speichers von einem druckfesten Gehäuse umgeben ist, da die Druckfestigkeit lediglich innerhalb des Kanalsystems der ersten Wärmetauscheinrichtung benötigt wird. Während bei den gattungsgemäßen Sorptions-Speichervorrichtungen ferner der Wärmetausch des Speichers einerseits sowie des Verdampfer/Kondensators andererseits über eine äußere Gehäuseverrippung an ein äußeres gasförmiges Medium erfolgt, ermöglicht es die Ausbildung druckfester Kanalsysteme im Speicher und in einem Verdampfer/Kondensator oder in gesonderten Verdampfern und Kondensatoren, auch flüssige Wärmetauschmedien einzusetzen und über diese mit gutem Wirkungsgrad Wärme- und/oder Kälteverbraucher zu versorgen.

Im Rahmen der Erfindung ist es bevorzugt, den Speicher in einer ersten Baueinheit anzuordnen und entweder mit einem Verdampfer/Kondensator, der in einer zweiten Baueinheit angeordnet ist (Anspruch 2) oder mit gesonderten Verdampfern und Kondensatoren zusammenwirken zu lassen, die (gemäß Anspruch 3) in einer zweiten und in einer gesonderten dritten Baueinheit angeordnet sind.

Bei Verwendung eines Verdampfer/Kondensators werden die an sich bestehenden thermodynamischen Wirkungsgradverluste von Verdampfer/Kondensatoren im Vergleich mit gesonderten Verdampfern und Kondensatoren, die je nach Prozeßführung zwischen etwa 7 bis 10 % betragen, bei weitem durch die technischen Vorteile wettgemacht. So kann die Vorrichtung kompakt mit kürzesten externen Strömungsverbindungen, ja einer einzigen Verbindungsleitung, gestaltet werden. Der gute Wirkungsgrad wird dadurch erreicht, daß der Verdampfer/Kondensator gegen die Umgebung völlig wärmeisoliert, etwa gar mit Vakuumisolation gebaut und mit der einen (großen) Wärmewiderstand bildenden Verbindungsleitung zur ersten Baueinheit versehen ist. Des weiteren führt der minimale Werkstoffeinsatz der zweiten Baueinheit, die neben der ersten Baueinheit allein vorhanden sein kann, zu einer niedrigen konsumtiven Wärmekapazität.

Bei Verwendung gesonderter Verdampfer und Kondensatoren können die jeweiligen Baueinheiten flexibel angeordnet und an die Wärmetauschfluide angepaßt ausgebildet werden. Im Vergleich zur Verwendung eines Verdampfer/Kondensators ist dabei allerdings der Einsatz an Masse, welche konsumtive Wärmekapazitäten bildet, und auch an Verlustquellen darstellende externe Strömungsverbindungen größer, so daß entgegen der allgemeinen Tendenz bei Systemen mit Ventilsteuerung des Arbeitsmittels im Rahmen der Erfindung meist die Verwendung von Verdampfer/Kondensatoren vorzuziehen ist.

Da der als Sorptionsmittel dienende Feststoff auch im Rahmen der Erfindung weiterhin ausschließlich mit dem Arbeitsmittel beaufschlagt wird, muß die äußere Umhüllung des Feststoffes auch weiterhin druckfest sein. Es ist jedoch nicht mehr erforderlich, hierzu das Gehäuse des Speichers selbst für sich druckfest auszubilden, da ein Großteil der Stützkraft gegen den äußeren Atmosphärendruck gemäß Anspruch 4 vom Feststoffabsorber selbst aufgenommen werden kann. Da das Druckgefälle ständig von außen nach innen besteht, ermöglicht diese Bauweise die Verwendung lediglich gasdichter Gehäusewände, die innen am Feststoff aufliegen. Diese Gehäusewände können dabei im Grenzfall folienhaft dünn ausgebildet sein.

Im Rahmen der Erfindung kann die Aufheiz-Wärmetauscheinrichtung wie bei bekannten vergleichbaren Vorrichtungen als Gasheizung (FR-PS 1 018 022), als Dampfheizung (DE-PS 522 887) oder als Heizung unter Verwendung elektrischen Stroms (DE-PS 814 157),oder in anderer bekannter Weise, ausgebildet sein. Gemäß einer bevorzugten Ausführungsform nach Anspruch 5 wird jedoch ein Aufheizfluid benutzt, welches durch ein im Feststoff eingebettetes druckfestes Kanalsystem geführt wird. Anspruch 6 sieht vor, dabei diese Aufheiz-Wärmetauscheinrichtung unabhängig von der ersten Wärmetauscheinrichtung vorzusehen, mittels derer Wärme aus dem Feststoffabsorber abtransportiert wird. Man kann aber auch gemäß den Ansprüchen 7 und 8 beide Wärmetauscheinrichtungen mehr oder minder stark koppeln. Anspruch 8 sieht dabei den Grenzfall vor, daß sogar beide Wärmetauscheinrichtungen identisch sind und dabei lediglich im Gegentakt in unterschiedlicher Funktion beaufschlagt werden, wiederum im Grenzfall eventuell gar von demselben Wärmetauschfluid in verschiedenem Aufheizzustand. Anspruch 8 beschreibt eine Möglichkeit, die Kanalsysteme noch gesondert zu halten, jedoch ihre Verrippung zu vereinheitlichen.

Als Feststoff-Wärmetauscher-Funktionseinheiten mit eigenen druckfesten Kanalsystemen und gegebenenfalls einer Festigkeit, welche auch zur Aufnahme äußeren Atmosphärendrucks im Sinne von Anspruch 4 geeignet ist, werden zweckmäßig solche der Bauart des DE-Patents 33 24 745 oder dessen deutschen Zusatzpatents 34 24 116 verwendet.

Bevorzugt wird eine modulare Bauweise gemäß Anspruch 9 verwendet. Dies ermöglicht grundsätzlich eine leistungsangepaßte Bauweise aus vorgefertigten relativ kleinen sowohl wirkungsgradmäßig als auch leistungsmäßig optimierten Modulen. Dies gilt nicht nur für die Neuerrichtung erfindungsgemäßer Sorptions-Speichervorrichtungen, sondern auch für deren Leistungssteuerung mit wahlweiser Schaltung nach Anspruch 10. Mehrere kleinere Sorptionsspeicher parallel zu schalten, ist aus der DE-OS 32 12 608, insbes. S. 13, Abs. 3, an sich bekannt.

Der modulare Aufbau ist auch möglich, wenn gemäß Anspruch 11 alle Module in einer einzigen ersten Baueinheit zusammengefaßt sind. Man kann jedoch gemäß Anspruch 12 auch die erste Baueinheit in Untereinheiten aufteilen.

Ein anderer Anwendungsfall einer modularen Aufteilung der ersten Baueinheit besteht darin, gemäß Anspruch 13 den an sich diskontinuierlichen Betrieb der erfindungsgemäßen Sorptions-Speichervorrichtung im Ergebnis quasi-kontinuierlich zu machen, indem man einen phasenversetzten Takt von mindestens zwei Unter-Sorptions-Speichervorrichtungen gemäß der Erfindung vorsieht. Ein Gegentaktbetrieb mit zwei Unter-Sorptions-Speichervorrichtungen der gattungsgemäßen Bauart ist bereits aus der DE-PS 522 887 an sich bekannt.

Überraschenderweise hat sich gezeigt, daß Sorptions-Speichervorrichtungen gemäß der Erfindung, soweit sie eine Gasheizeinrichtung verwenden, sogar als Fahrzeug-Klimaeinrichtungen gemäß Anspruch 14 ausgebildet sein können; bisher hat man Sorptions-Speichervorrichtungen als Fahrzeug-Klimageräte für ungeeignet gehalten. Die erfindungsgemäße Sorptions-Speichervorrichtung läßt sich jedoch gerade für den Fahrzeugbetrieb leichtgewichtig ohne störungsanfällige Vakuumventile mit flexibler Einbaubarkeit im Fahrzeug und hinreichend hohem Wirkungsgrad sogar unter Verwendung der Abwärme von Abgasen ausbilden. Unter weiterer Berücksichtigung der Verzichtsmöglichkeit auf Umwälzeinrichtungen für das Arbeitsmittel ergibt sich eine hohe Betriebssicherheit auch unter den Erschütterungsbedingungen eines Fahrzeugbetriebes. Ebenso kann man aber auch einen Aufbau nach Art der bekannten eigenen Kraftstoff-Verbrennungseinrichtungen wählen.

Um den an sich etwas geringeren Wirkungsgrad eines kombinierten Verdampfer/Kondensators maximal zu nutzen, ist es gemäß Anspruch 15 empfehlenswert, im Verdampfer/Kondensator für das wärmeabführende und für das wärmezuführende Wärmetauschfluid gesonderte Kanalsysteme der zweiten Wärmetauscheinrichtung vorzusehen.

Zur Ausbildung der externen jeweiligen Strömungsverbindung gibt es grundsätzlich zwei alternative Grenzfälle. Der eine Grenzfall besteht darin, gemäß Anspruch 16 die Strömungsverbindung kurz und aus einem schlecht wärmeleitenden Material auszubilden. Der andere Grenzfall nach Anspruch 18 besteht darin, die Strömungsverbindung lang und aus einem dünnwandigen metallischen Material mit niedriger Wärmeleitfähigkeit zu gestalten. Die Ansprüche 17 und 19 geben für diese beiden Grenzfälle jeweils eine bevorzugte Materialwahl an.

Als Wärme vom Feststoffabsorber abführendes Wärmetauschfluid kann auch ein solches verwendet werden, welches während der Wärmeabführung einen Phasenübergang flüssig-gasförmig durchmacht. Am Ende der Abkühlphase befindet sich dieses Wärmetauschfluid also in flüssiger Phase innerhalb der ersten Baueinheit. Wenn in der Desorptionsphase der Feststoffabsorber von einem gesonderten Wärmetauschmittel aufgeheizt wird, ist es empfehlenswert, daß diese Aufheizung nicht auch in der ersten Wärmetauscheinrichtung zurückgebliebenes flüssiges Wärmetauschfluid erfaßt, welches zuvor Wärme abgeführt hat. Hierzu sieht Anspruch 20 eine vor Beginn der Desorptionsphase wirksam werdende Abpumpmöglichkeit für das in flüssiger Phase befindliche Wärmetauschfluid vor, welches in der ersten Wärmetauscheinrichtung von der Wärmeabfuhr zurückgeblieben ist. Ein sekundärer Wärmeträgerkreislauf ohne Pumpsystem ist an sich aus der DE-OS 32 12 608, insbes. S. 7, Abs. 2, bekannt. Der Abpump vorgang wird erleichtert, wenn gemäß Anspruch 21 an der Ausgangsleitung der ersten Wärmetauscheinrichtung ein Belüftungsventil vorgesehen ist.

Alternativ zu einem die beschriebene Phasenumwandlung durchmachenden wärmeabführenden Wärmetauschfluid kann man gemäß Anspruch 22 auch ein solches Wärmetauschfluid vorsehen, das ständig flüssig ist und somit auch in der Desorptionsphase die erste Wärmetauscheinrichtung füllt. Ähnliches ist aus der DE-OS 32 12 608 speziell bezüglich der Wasserfüllung einer Warmwasserheizung an sich bekannt (vgl. insbes. S. 7, Abs. 2); dieser Gedanke läßt sich jedoch verallgemeinern, z.B. auf eine permanente Füllung mit Wärmeträgeröl. Dies ist zwar bezüglich des Wirkungsgrades im geschilderten Sinne ungünstiger, vereinfacht jedoch den insgesamt erforderlichen Aufwand, insbesondere hinsichtlich Pumpmitteln, etwaigen Belüftungsmitteln und äußeren Schaltventilen.

Die bekannten gattungsgemäßen Sorptions-Speichervorrichtungen sind ausschließlich zur Kälteerzeugung ausgelegt, wobei entstehende Wärme über äußere Gehäuseverrippungen oder auch an eine Kühlschlange (DE-PS 522 887) abgegeben wird. Die Ansprüche 23 bis 25 sehen stattdessen vor, die erfindungsgemäße Sorptions-Speichervorrichtung außer zur Kälteerzeugung auch noch zur Wärmeerzeugung nutzbar zu machen. Durch die fakultative Bezugnahme auf die Kälteerzeugung ergibt sogar die Möglichkeit, die erfindungsgemäße Vorrichtung alleine zur Wärmeerzeugung zu nutzen. Als Wärmeverbraucher kommt vorzugsweise eine Warmwasserheizung oder ein Brauchwasserboiler in Frage.

Vorzugsweise ist das Kanalsystem des wärmeabführenden Wärmetauschfluids der ersten Wärmetauscheinrichtung mit einem Vorratsgefäß für das im flüssigen Zustand befindliche Wärmetauschfluid strömungsmäßig verbunden. Soweit dabei dieses Wärmetauschfluid eine Phasenumwandlung durchmacht, ist dieses Vorratsgefäß zur Zwischenspeicherung des Wärmetauschfluids verwendbar. Das schafft die Möglichkeit, gemäß Anspruch 26 das Vorratsgefäß zugleich als Wärmeverbraucher in Gestalt eines Brauchwasserboilers auszubilden. Einen Brauchwasserboiler als Wärmeverbraucher einer Warmwasserheizung vorzusehen, ist an sich auch schon aus der gattungsbildenden DE-OS 32 12 608 bekannt. Dieses Vorratsgefäß kann insbesondere, aber nicht ausschließlich, zur Aufnahme von nach Anspruch 20 abgepumptem Wärmetauschfluid verwendet werden. In anderen Fällen, z.B. dem eines ständig flüssigen Wärmetauschfluids nach Anspruch 22, kann das Vorratsgefäß als Ausdehnungsgefäß ausgebildet sein. Zugleich kann das Vorratsgefäß in allen Fällen als Meßgefäß ausgebildet sein.

Oft ist es erwünscht, daß die Temperatur des Feststoffabsorbers unter die Arbeitstemperatur des Wärmeverbrauchers, z.B. des Brauchwasserspeichers, abzusenken. In diesem Falle sieht Anspruch 28 eine Möglichkeit vor, die Wärmeaufnahme im Vorratsgefäß zu begrenzen und während der weiter fortschreitenden Absorptionsphase im Feststoffabsorber das wärmeabführende Wärmetauschfluid auf eine Bypassleitung umzuleiten, über die an einem anderen Wärmeverbraucher weiterhin Wärme abgegeben wird. Dieser andere Wärmeverbraucher kann ein Nutzverbraucher, aber auch ein Abwärmeverbraucher sein, z.B. ein Lufterhitzer.

In der Praxis wird sich allmählich die Zusammensetzung des in der Gasphase befindlichen Arbeitsmittels durch Vermengung mit zusätzlichen gas- oder dampfförmigen Bestandteilen verschlechtern, sei es aufgrund Eindringens äußerer Luftanteile, sei es durch Entgasungsvorgänge der Kanalsysteme. Zur Regenerierung kann eine Gaspumpeinrichtung gemäß Anspruch 29 vorgesehen sein, die in zweckmäßigen Serviceinter vallen in Betrieb genommen wird. Man kann dabei Gasabpumpeinrichtungen einfachster Bauart, beispielsweise eine Wasserstrahlpumpe, verwenden. Dies gilt insbesondere, wenn als Arbeitsmittel Wasser Anwendung findet, weil bei einer Wasserstrahlpumpe praktisch nur Wasserdampf als Partialdruck verbleibt.

Die erfindungsgemäß Anwendung findenden Baueinheiten können auch in ihren das Arbeitsmittel führenden Kanalsystemen auf Überdruckbetrieb ausgelegt sein. Dieser Überdruckbetrieb kann regelmäßig in einer Betriebsphase auftreten oder auch nur gezielt für Servicezwecke durch relativ zu den normalen Betriebstemperaturen in bestimmten Serviceintervallen erfolgende bewußte Hochheizung eines Verdampfer/Kondensators oder der beiden Komponenten Verdampfer und Kondensator. Für diesen Fall sieht Anspruch 30 als Überdrucksicherung eine Gasüberdruckventileinrichtung vor. Diese kann in dem letztgenannten Fall der nur für Servicezwecke erfolgenden Aufheizung auch zu zwangsweisem Ausblasen von Verunreinigungen nutzbar gemacht werden.

Die Erfindung wird im folgenden anhand schematischer Zeichnungen an mehreren Ausführungsbeispielen näher erläutert.

Es zeigen:

Fig. 1 eine erste Ausführungsform einer Sorptions-Speichervorrichtung mit Feststoffabsorber und einem Verdampfer/Kondensator mit einer ersten Ausführungsform der zweiten Wärmetauscheinrichtung;

Fig. 2 ein zweites Ausführungsbeispiel der Erfindung, bei dem die erste Ausführungsform durch eine andere Gestaltung der zweiten Wärmetauscheinrichtung abgewandelt ist;

Fig. 3 eine dritte Ausführungsform, bei der die zweite Ausführungsform in der ersten Baueinheit abgewandelt ist;

Fig. 4 im Rahmen einer vierten Ausführungsform eine Variante der Ausbildung der ersten Baueinheit in Verbindung mit einem Verdampfer/Kondensator gemäß dem ersten Ausführungsbeispiel;

Fig. 5 im Rahmen einer fünften Ausführungsform eine Zuordnungsmöglichkeit von ersten Baueinheiten zu zweiten Baueinheiten mit Ausbildung gemäß dem ersten Ausführungsbeispiel für einen phasenversetzten quasikontinuierlichen Betrieb der Sorptions-Speichervorrichtung;

Fig. 6 im Rahmen eines sechsten Ausführungsbeispiels eine Variante der zweiten Ausführungsform mit zusätzlichen Bauelementen im Kreislauf der Wärmetauschfluide; und

Fig. 7 eine alternative siebte Ausführungsform, bei der ein Verdampfer/Kondensator durch einen einzelnen Verdampfer oder einen einzelnen Kondensator ersetzt ist.

Die Sorptions-Speichervorrichtungen sind anhand von funktionellen Zuordnungen der einzelnen Baueinheiten und Elemente beschrieben. Funktionsbedingt durch die möglichst kompakte Zu ordnung der im geschlossenen Kreislauf des Arbeitsmittels liegenden Baueinheiten stellen sie zugleich auch Arbeitsgerätschaften mit bestimmter Raumform dar. Hierzu kommt eine gemeinsame Befestigung auf einer Bodenplatte, in einem Traggestell, an einer Konsole o.dgl. in Frage, so daß die Sorptions-Speichervorrichtung als einheitliches Gerät in einem gegebenen Kühl- und/oder Heizfunktionszusammenhang eingesetzt werden kann.

Bei allen Ausführungsformen findet ein Absorberfeststoff bekannter Art Anwendung. Bevorzugt sind Zeolith- oder Silicagel. In beiden Fällen kommen als bevorzugte Arbeitsmittel Wasser oder Ammoniak in Frage.

Der Feststoff ist in einer ersten Baueinheit 2 enthalten. Diese weist ein gasdichtes Gehäuse 4 auf, welches außer von einer Wärmedämmung 6 umgeben ist. Innerhalb des Gehäuses 4 ist in dem als Sorptionsmittel dienenden Feststoff 8 ein druckfestes Kanalsystem 10 einer ersten Wärmetauscheinrichtung 12 eingebettet. Das Kanalsystem 10 führt ein Wärmetauschfluid, welches von dem Feststoff 8 Wärme abführt. Das eine Ende des Kanalsystems 10 ist dabei an den aus der ersten Baueinheit 2 herausführenden Ausgang 14 und das andere Ende des Kanalsystems 10 an den in die erste Baueinheit 2 hineinführenden Eingang 16 für das wärmeabführende Wärmetauschfluid angeschlossen.

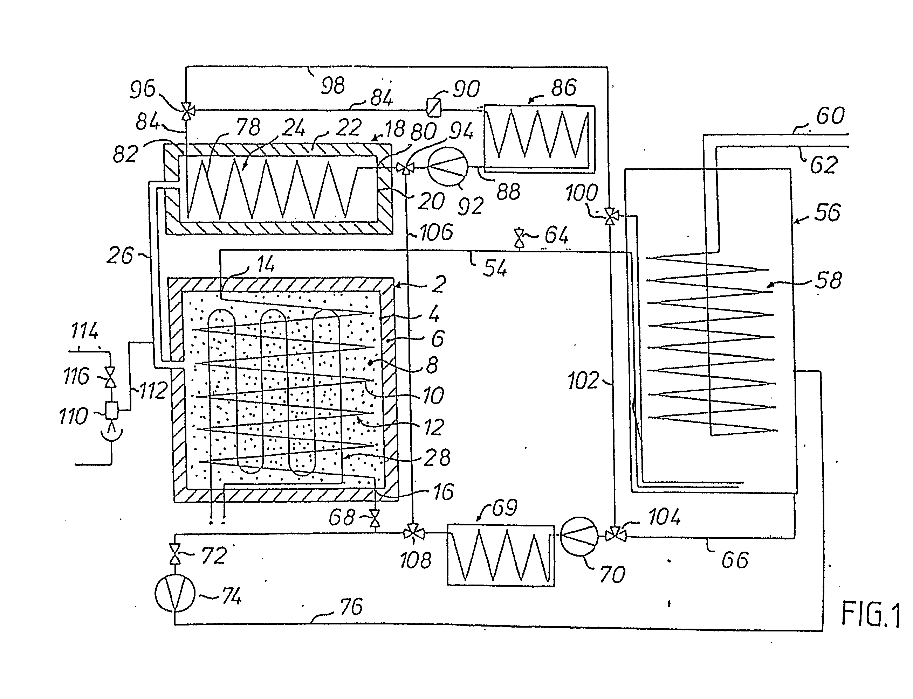

Bei den Ausführungsformen der Fig. 1 bis 6 ist ein Verdampfer/Kondensator als zweite Baueinheit 18 mit einem druckfesten Gehäuse 20 und einer äußeren Wärmedämmung 22 vorgesehen.

Die Wärmedämmungen 6 und 22 bestehen entweder aus einem sehr gut wärmedämmenden Material, z.B. Mineralfasermatte einschließlich Glasfasermatte, Schaumkunststoff wie Polyurethanschaum oder Polystyrolschaum, oder gar einer Vakuumisolation.

Innerhalb der zweiten Baueinheit 18 ist eine zweite Wärmetauscheinrichtung 24 angeordnet, die dazu dient, über ein in ihr geführtes Wärmetauschfluid in der Kondensationsphase Wärme abzuführen bzw. in der Verdampfungsphase Wärme zuzuführen.

Der Innenraum des druckfesten Gehäuses 20 der zweiten Baueinheit 18 ist mit dem Innenraum des gasdichten Gehäuses 4 der ersten Baueinheit 2 über eine ständige externe druckfeste Strömungsverbindung 26 kommunizierend verbunden, derart, daß das Arbeitsmittel zwischen den Innenräumen der beiden Gehäuse 4 und 20 über die externe Strömungsverbindung 26 im geschlossenen System geführt ist. Die externe Strömungsverbindung 26 ist als Wärmewiderstand ausgebildet.

Innerhalb des Gehäuses 4 der ersten Baueinheit 2 kann mindestens eine kompakte Feststoff-Wärmetauscher-Funktionseinheit 130 gebildet sein, welche das Gehäuse 4 gegen den äußeren Atmosphärendruck abstützt. Dann kann das Gehäuse 4 im Grenzfall folienartig dünn ausgebildet sein. In anderen Fällen kann das Gehäuse 4 selbst auch druckfest ausgebildet sein, insbesondere dann, wenn ein Betrieb des Arbeitsmittels unter Überdruck vorgesehen ist.

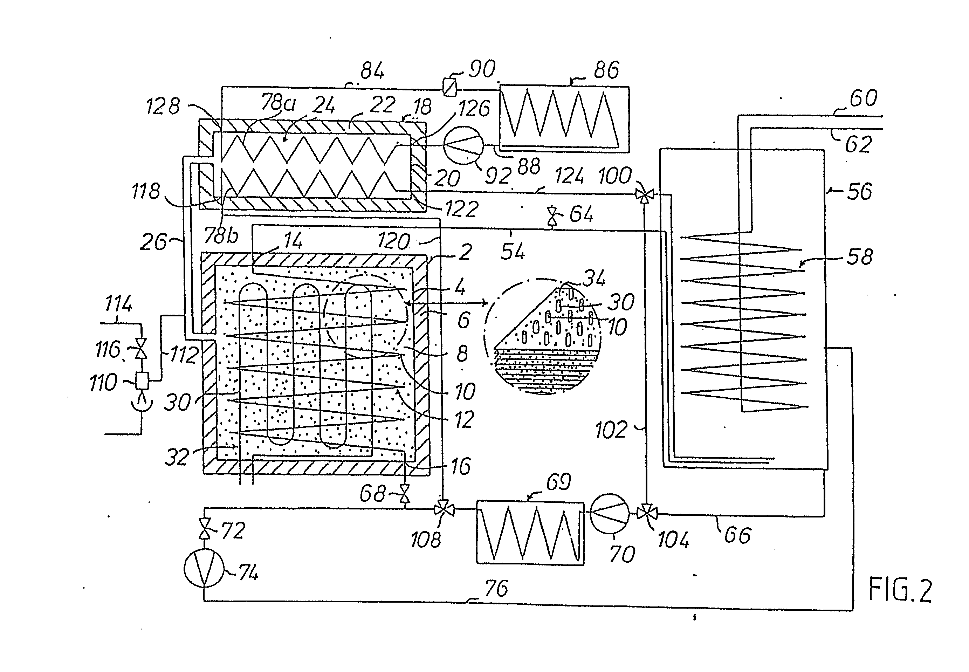

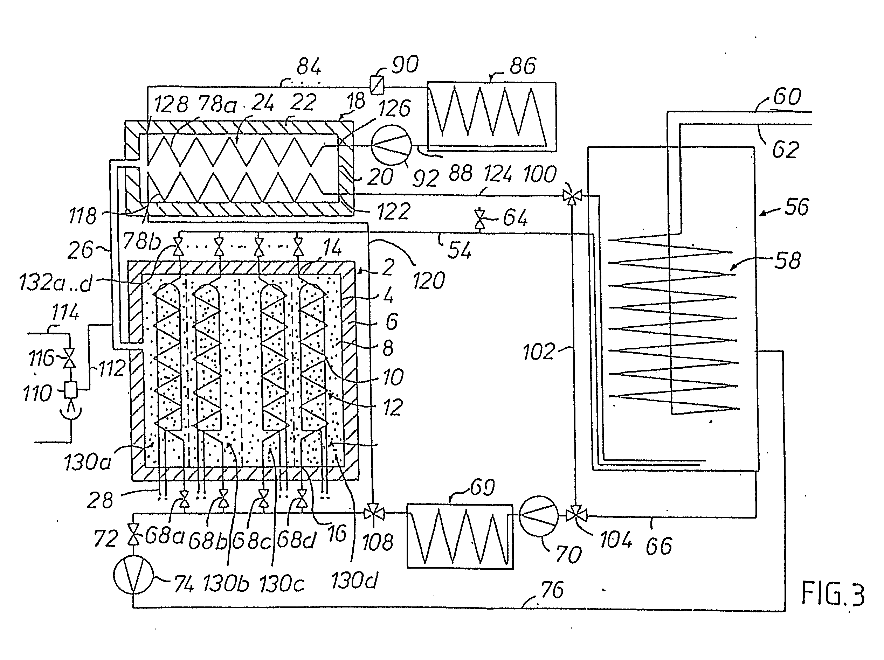

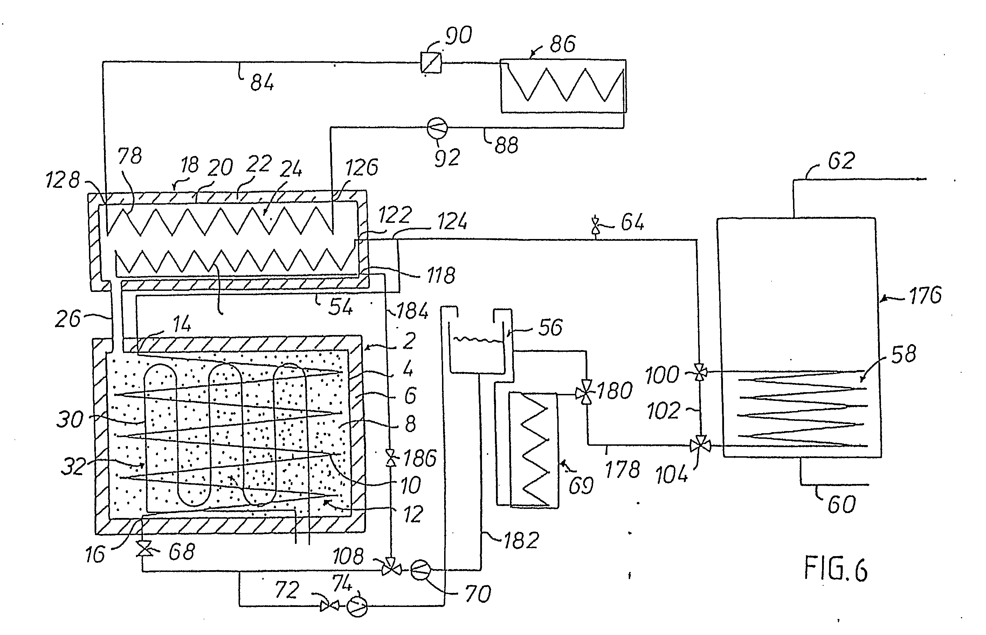

Der Feststoff 8 der ersten Baueinheit ist mittels eines Heizmittels aufheizbar. Ohne Beschränkung der Allgemeinheit ist in den Ausführungsbeispielen der Fig. 1 und 3 eine elektrische Aufheizeinrichtung 28 vorgesehen, bei der die zwei Pole eines Heiz-Gleichstromes aus der ersten Baueinheit 2 herausgeführt sind und ein Heizdraht den Feststoff 8 durchzieht. An die Stelle des Heizdrahtes kann auch jede andere Ausbildung, z.B. mit Heizstäben, treten. Bei der Ausführungsform gem. Fig. 2 und 6 ist stattdessen ein im Feststoff eingebettetes druckfestes Kanalsystem 30 einer von einem Aufheizfluid beaufschlagten Aufheiz-Wärmetauscheinrichtung 32 vorgesehen. In Fig. 2 und 6 ist dabei eine Ausbildung gezeigt, bei der die Aufheiz-Wärmetauscheinrichtung 32 von der ersten Wärmetauscheinrichtung 12 gesondert ausgebildet ist. Es ist dabei auch noch eine Variante angedeutet, bei der die beiden letztgenannten Wärmetauscheinrichtungen 12 und 32 eine gemeinsame Verrippung 34 besitzen.

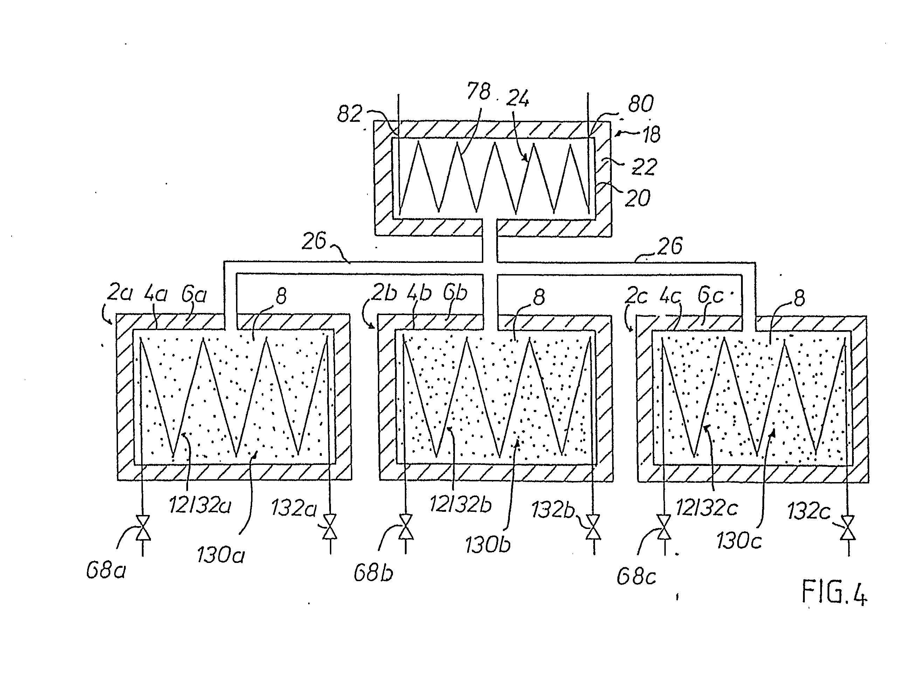

Fig. 4, 5 und 7 zeigen dann den anderen Grenzfall, bei dem die erste Wärmetauscheinrichtung 12 sowie die Aufheiz-Wärmetauscheinrichtung 32 identisch sind und für die verschiedenen Zwecke mit demselben Wärmetauschfluid in verschiedenem Aufheizzustand beaufschlagt werden.

Es versteht sich, daß diese Varianten ebenso wie die nachfolgend noch beschriebenen bei den verschiedenen Ausführungsbeispielen je nach Wahl beliebig ausgetauscht werden können.

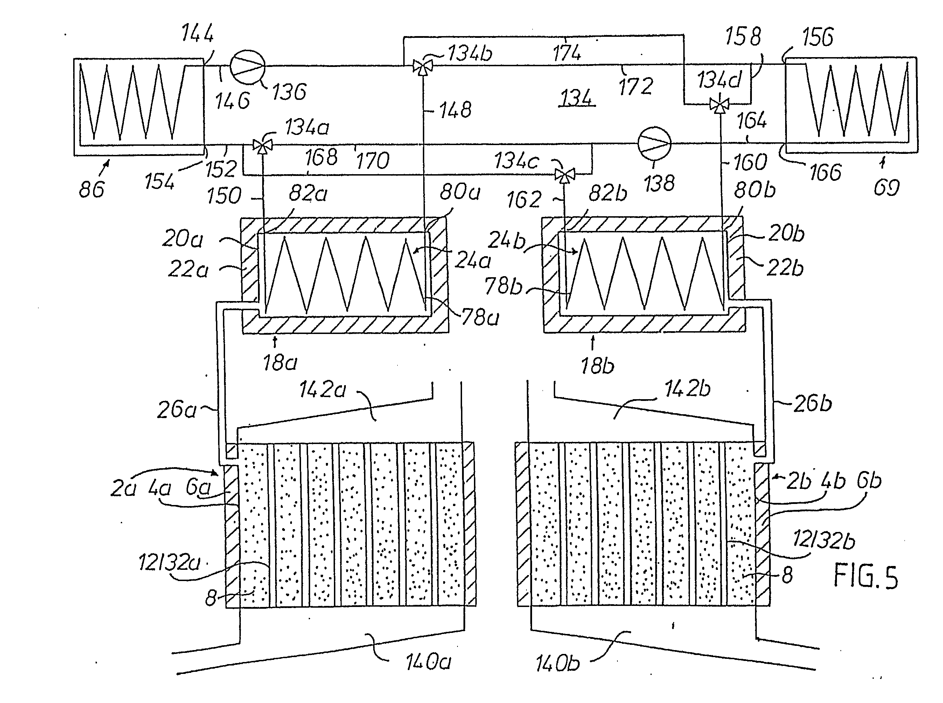

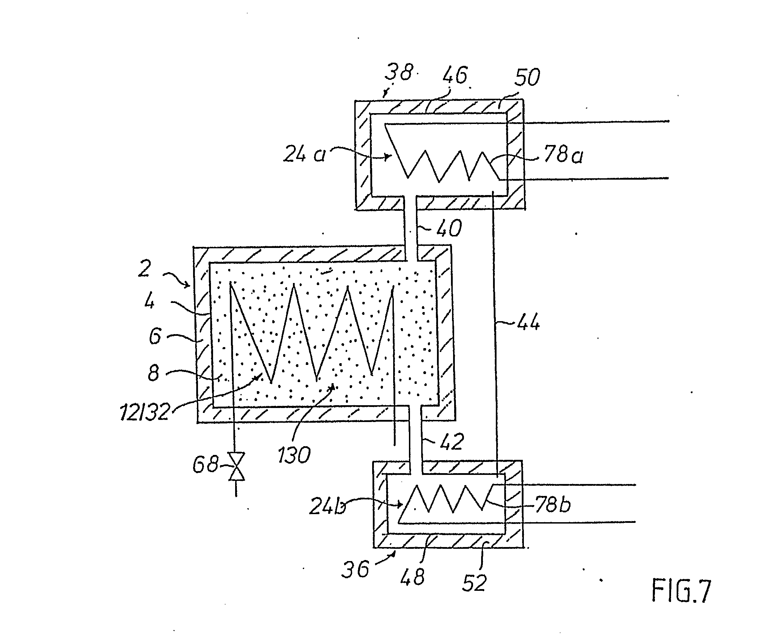

Während bei der Ausführungsform der Fig. 4 und 7 daran gedacht ist, daß das Aufheizfluid insbesondere flüssig ist, zeigt Fig. 5 eine Variante, bei der das Aufheizfluid gasförmig ist, wobei wiederum Identität der ersten Wärmetauscheinrichtung 12 sowie der Aufheiz-Wärmetauscheinrichtung 32 besteht.

Bei der Ausführungsform gemäß Fig. 7 ist die einen Verdampfer/Kondensator bildende zweite Baueinheit 18 ersetzt durch eine den Verdampfer bildende Baueinheit 36 und eine weitere Baueinheit 38, welche den Kondensator bildet. Ebenso ist die - einzige - Strömungsverbindung 26 in jeweils Arbeitsmitteldampf führende Leitungsabschnitte 40 und 42 sowie einen Arbeitsmittelkondensat führenden Abschnitt 44 aufgeteilt. Dabei verbindet der Abschnitt 40 die erste Baueinheit 2 mit der Baueinheit 38, der Abschnitt 42 die erste Baueinheit mit der Baueinheit 36 und der Abschnitt 44 die Baueinheiten 36 und 38 untereinander. Dabei entsteht ein geschlossener Arbeitsmittel kreislauf zwischen den druckfesten Gehäusen 46 und 48 der Baueinheiten 36 und 38 sowie dem Gehäuse 4 der ersten Baueinheit. Auch die Baueinheiten 36 und 38 weisen äußere Wärmedämmungen 50 bzw. 52 nach Art der Wärmedämmung 22 der zweiten Baueinheit 18 der früher beschriebenen Ausführungsformen der Fig. 1 bis 6 auf. Alle Abschnitte 40, 42 und 44 sind nach Art der Strömungsverbindung 26 der Fig. 1 bis 6 jeweils als Wärmewiderstand ausgebildet.

Die Ausführungsform der Fig. 6 zeigt dabei eine Anordnung, die sinngemäß auch auf die anderen Ausführungsformen übertragbar ist und bei der die Strömungsverbindung 26 besonders kurz ist. Im nicht dargestellten Grenzfall können dabei die Wärmedämmungen 22 und 6 unmittelbar aneinander angrenzen.

Die einzelnen Ausführungsformen zeigen sonst folgende Besonderheiten:

Bei der Ausführungsform gemäß Fig. 1 ist der Ausgang 14 der ersten Baueinheit 2 über eine Fluidleitung 54 mit dem Innenraum eines Vorratsbehälters 56 verbunden. Der Vorratsbehälter 56 ist als Brauchwasserboiler ausgebildet und besitzt hierzu eine Wärmetauscheinrichtung 58, durch die an den Anschlüssen 60 und 62 Brauchwasser zu- und abgeführt werden kann. An der Leitung 54 ist ein Belüftungsventil 64 angeschlossen. Die Fluidleitung 54 ist hinter dem Vorratsbehälter 56 fortgesetzt in einer Fluidleitung 66, die über ein Ventil 68 für die Steuerung des wärmeabführenden Wärmetauschfluids mit dem Eingang 16 verbunden ist. In die Fluidleitung 66 ist ein Wärmeverbraucher 69 eingeschaltet, dem eine Umwälzpumpe 70 für das von der ersten Baueinheit 2 wärmeabführende Wärmetauschfluid vorgeschaltet ist.

Vor dem Eingang des Ventils 68 ist die Fluidleitung 66 über ein Absperrventil 72 und eine Saugpumpe 74 sowie eine weiterführende Fluidleitung 76 mit dem Vorratsraum des Vorratsbehälter 56 verbunden. Mittels der Saugpumpe 74 kann ein solches von der ersten Baueinheit 2 Wärme abführendes Wärmetauschfluid, welches eine Phasenumwandlung durchmacht, aus dem Kanalsystem 10 in flüssiger Phase in den Vorratsbehälter 56 vor Beginn der Desorptionsphase abgepumpt werden.

Die zweite Wärmetauscheinrichtung 24 der zweiten Baueinheit 18 weist ein einziges druckfestes Kanalsystem 78 auf, welches den vom Gehäuse 20 umgebenen Raum durchzieht sowie einen Eingang 80 und einen Ausgang 82 der zweiten Baueinheit 18 aufweist.

Der Ausgang 82 führt über eine Fluidleitung 84 zum Eingang eines Kälteverbrauchers 86, dessen Ausgang über eine Fluidleitung 88 mit dem Eingang 80 der zweiten Baueinheit 18 strömungsmäßig verbunden ist. In der Fluidleitung 84 ist eine Drossel 90 eingeschaltet. In der Fluidleitung 88 ist eine Umwälzpumpe 92 eingeschaltet. Diese ist über einen Dreiwegehahn 94 mit dem Eingang 80 verbunden. Ebenso ist hinter dem Ausgang 82 in die Fluidleitung 84 ein weiterer Dreiwegehahn 96 eingeschaltet.

Der freie Anschluß des Dreiwegehahns 96 führt über eine Fluidleitung 98 zu einem Dreiwegehahn 100 und über diesen in den Vorratsbehälter 56. Der freie Anschluß des Dreiwegehahns 100 führt über eine weiterführende Fluidleitung 102 zu noch einem Dreiwegehahn 104, welcher in die Fluidleitung 66 zwischen der Umwälzpumpe 70 und dem Vorratsbehälter 56 eingeschaltet ist.

Ferner ist der freie Anschluß des Dreiwegehahns 94 über eine Fluidleitung 106 mit noch einem Dreiwegehahn 108 verbunden, dessen beide andere Anschlüsse in die Fluidleitung 66 zwischen dem Eingang des Ventils 68 und dem Ausgang des Wärmeverbrauchers 69 eingeschaltet sind.

Schließlich ist die Strömungsverbindung 26 mit einer Wasserstrahlpumpe 110 über eine Abzweigungsleitung 112 verbunden, deren Wasserleitung 114 über ein Absperrventil 116 gesteuert ist.

Die diskontinuierlichen Betriebsphasen der beschriebenen Sorptions-Speichervorrichtung sind folgende:

In der Desorptionsphase wird der Feststoff 8 über das Heizmittel - hier die elektrische Aufheizeinrichtung 28 - aufgeheizt. Dabei wird im Feststoff 8 ab- oder adsorbiertes Arbeitsmittel ausgetrieben und über die Strömungsverbindung 26 in die zweite Baueinheit 18 überführt und dort kondensiert. Dabei ist der Ausgang 82 über die Fluidleitung 98 mit dem Vorratsbehälter 56 strömungsmäßig verbunden. Aus dem Vorratsbehälter 56 wird dasselbe Wärmetauschfluid über die Fluidleitung 66 durch die Umwälzpumpe 70 weiter zu dem Wärmeverbraucher 69 und von diesem über die Leitung 106 sowie den Dreiwegehahn 94 in die zweite Wärmetauscheinrichtung 24 der zweiten Baueinheit 18 zurückgeführt.

Wenn der Vorratsbehälter 56 die gewünschte Betriebstemperatur erreicht hat, werden die Dreiwegehähne 100 und 104 umgestellt, so daß dann die Zirkulation über die dann als Bypassleitung dienende Fluidleitung 102 unter Umgehung des Vorratsbehälters 56 unmittelbar zwischen der Fluidleitung 98 und der Fluidleitung 66 erfolgt.

In der Absorptionsphase ist das Heizmittel des Feststoffs abgestellt. Dann erfolgt unter entsprechender Umstellung des Ventils 68 sowie der Dreiwegehähne 104 und 108 ein Kreislauf des wärmeabführenden Wärmetauschfluids aus dem druckfesten Kanalsystem 10 der ersten Wärmetauscheinrichtung 12 durch den Ausgang 14 und die Leitung 54 in den Vorratsbehälter 56 und von diesem über die Leitung 66 und das Ventil 68 zum Eingang 16 der ersten Baueinheit 2 zurück.

Mit dem Abkühlen des Feststoffs 8 beginnt auch die Absorption des Arbeitsmittels, das im Verdampfer/Kondensator der zweiten Baueinheit 18 kondensiert war. Bei Erreichen der durch den Kälteverbraucher bestimmten Verdampfungstemperatur in der zweiten Baueinheit 18 werden die Dreiwegehähne 94 und 96 umgestellt und die einstellbar ausgebildete Drossel 90 geöffnet. Mittels der Umwälzpumpe 92 wird das nunmehr der zweiten Baueinheit 18 wärmezuführende Wärmetauschfluid durch das Kanalsystem 78 der zweiten Baueinheit 18 gepumpt und strömt über die Leitung 84 dem Kälteverbraucher 86 zu und von diesem über die Leitung 88 zur Umwälzpumpe 92 zurück. Dabei kühlt sich das Wärmetauschfluid zwischen Eingang 80 und Ausgang 82 der zweiten Baueinheit 18 ab.

Bei den Ausführungsformen gem. Fig. 2, 3 und 6 weist die zweite Wärmetauscheinrichtung 24 der zweiten Baueinheit 18 gesonderte druckfeste Kanalsysteme 78a und 78b der zweiten Wärmetauscheinrichtung 24 auf, um das der zweiten Baueinheit wärmezuführende Wärmetauschfluid und das von dieser zweiten Baueinheit wärmeabführende Wärmetauschfluid in gesonderten Kreisläufen zu führen. Dadurch entfallen die Fluidleitung 98 sowie die beiden Dreiwegehähne 94 und 96 der Ausführungsform gemäß Fig. 1. Stattdessen ist der Dreiwegehahn 108 mit dem Einlaß 118 des Kanalsystems 78b über die Fluidleitung 120 verbunden sowie der Auslaß 122 des Kanalsystems 78b über die Fluidleitung 124 mit dem Dreiwegehahn 100. Die Fluidleitung 120 ersetzt dabei die Fluidleitung 106 der Ausführungsform gemäß Fig. 1.

Der Ausgang der Umwälzpumpe 92 ist nunmehr mit dem Einlaß 126 und die Fluidleitung 84 mit dem Auslaß 128 des Kanalsystems 78a verbunden.

Die Betriebsweise ist der gemäß Fig. 1 weitgehend analog. Das gilt insbesondere auch für die Ventil- und Dreiwegehahn betätigungen, soweit noch vorhanden, in der Desorptionsphase.

In der Absorptionsphase wird der Kühlkreislauf allein durch Betätigung der Pumpe 92 sowie der einstellbaren Drossel 90 gesteuert.

Die Ausführungsform gemäß Fig. 3 ist bis auf folgenden Unterschied der der Fig. 2 nachgebildet:

In der ersten Baueinheit 2 sind nämlich mehrere Feststoff-Wärmetauscher-Funktionseinheiten 130a, 130b,... gemeinsam innerhalb des Gehäuses 4 angeordnet und über wahlweise einschaltbare Einlaßventile 68a, 68b, ... und ihnen zugeordnete Auslaßventile 132a, 132b, ... nach Wahl in den über die Leitungen 66 und 54 erfolgenden Kreislauf des von der ersten Baueinheit wärmeabführenden Wärmetauschfluids eingeschaltet. Jede Feststoff-Wärmetauscher-Funktionseinheit 130a, 130b, ... enthält eine eigene Aufheiz-Wärmetauscheinrichtung, die hier in Abwandlung von Fig. 2 wiederum wie nach Fig. 1 als elektrische Aufheizeinrichtung 28 dargestellt ist.

Fig. 4 zeigt, daß man statt einer Anordnung von einzelnen Feststoff-Warmetauscher-Funktionseinheiten 130a, 130b,... gemäß Fig. 3 in einem gemeinsamen Gehäuse 4 auch den einzelnen Feststoff-Warmetauscher-Funktionseinheiten 130a, 130b,...

eigene Gehäuse 4a, 4b,... und eigene Wärmedämmungen 6a, 6b,... zuordnen kann, so daß jede Feststoff-Wärmetauscher-Funktionseinheit 130a, 130b, ... mitsamt zugeordnetem Gehäuse und zugeordneter Wärmedämmung eine eigene Baueinheit 2a, 2b, ... bildet.

Den verschiedenen Baueinheiten 2a, 2b,... ist eine einzige zweite Baueinheit 18 der Bauweise gemäß Fig. 1 zugeordnet, wobei natürlich hier wiederum auch die Bauweise gemäß Fig. 2 vorgesehen sein kann.

Die Gehäuse 4a, 4b,... der einzelnen Baueinheiten 2a, 2b,... kommunizieren mit ihren Innenräumen durch ständige externe Leitungen 26 mit dem Innenraum der zweiten Baueinheit 2.

Die Ventile 68a, 68b,... sowie die Auslaßventile 132a, 132b, 132c sowie die weitere Kreislaufführung und Steuerung entsprechen denen der Fig. 3.

Bei der Ausführungsform gemäß Fig. 5 sind, ohne Beschränkung der Allgemeinheit, die zweiten Baueinheiten 18 doppelt als Baueinheiten 18a und 18b vorgesehen. Diese sind jeweils über eine Strömungsverbindung 26a bzw. 26b nach Art der der Fig. 1 mit einer jeweils einzeln zugeordneten eigenen ersten Baueinheit 2a bzw. 2b mit dem Arbeitsmittel ständig kommunizierend verbunden.

Die betriebsmäßige Verknüpfung kann der der Fig. 1, jedoch in doppelter Ausführung, entsprechen, wobei dabei eine Betriebsweise im Gegentakt, also phasenversetzt, erfolgt.

Im Falle der Fig. 5 ist als weitere Weiterbildungsmöglichkeit der ersten Baueinheit 2 eine für Fahrzeug-Klimaanlagen geeignete Bauform und Verknüpfung gezeigt.

Verknüpfungsmäßig sind ein Wärmeverbraucher 69 und ein Kälteverbraucher 86 über eine im Gegentakt betriebene Steuerventileinrichtung 134 an die beiden zweiten Baueinheiten 18a und 18b bzw. deren zweite Wärmetauscheinrichtungen kommunizierend angeschlossen. Je eine Umwälzpumpe 136 und 138 dient für den Betrieb des Kälte- bzw. des Heizkreislaufs des zugehörigen Verbrauchers.

Die kombinierte Wärmetauscheinrichtung einerseits für das von der ersten Baueinheit wärmeabführende Wärmetausch fluid sowie andererseits für das Aufheizmittel (mit der Benennung 12/32) ist hier durch Einlaßstutzen 140 und Auslaßstutzen 142 alternativ an Abgas eines Verbrennungsmotors eines Kraftfahrzeuges oder einer selbständigen Brennstoff verbrennenden Einrichtung des Fahrzeugs angeschlossen. Eine solche Betriebsweise alterniert mit einer Betriebsweise, bei der Kühlluft über nicht gezeigte Umsteuerungsventile zugeleitet wird.

Die Ventilsteuereinrichtung 134 verkörpert folgende funktionelle Verknüpfung:

Der Ausgang 144 des Kälteverbrauchers 86 führt über eine Fluidleitung 146 zum Dreiwegehahn 134b. Dabei ist in die Fluidleitung 146 die Umwälzpumpe 136 eingeschaltet. Von dem Dreiwegehahn 134b führt eine Fluidleitung 148 zum Eingang 80a der zweiten Baueinheit 18a. Deren Ausgang 82a führt über eine Fluidleitung 150 zum Dreiwegehahn 134a, der seinerseits über eine Fluidleitung 152 an den Eingang 154 des Kälteverbrauchers 86 strömungsmäßig angeschlossen ist.

Entsprechend ist der Ausgang 156 des Wärmeverbrauchers 69 über eine Fluidleitung 158 mit dem Dreiwegehahn 134d verbunden, der seinerseits über eine Fluidleitung 160 mit dem Eingang 80b der zweiten Baueinheit 18b strömungsmäßig verbunden ist. Deren Ausgang 82b führt über eine Fluidleitung 162 zum Dreiwegehahn 134c, der über eine weitere Fluidleitung 164, in welche die Umwälzpumpe 138 eingeschaltet ist, zum Eingang 166 des Wärmeverbrauchers 69 führt.

Zum Zwecke des Phasenwechsels sind zwischen diesen beiden beschriebenen Kreisläufen folgende Verknüpfungen vorgesehen:

Der freie Anschluß des Dreiwegehahns 134c führt über eine Fluidleitung 168 zu einer Abzweigung der Fluidleitung 152. Der freie Anschluß des Dreiwegehahns 134a führt über eine weitere Fluidleitung 170 zu einer Abzweigung der Fluidleitung 164. Der freie Anschluß des Dreiwegehahns 134b führt über noch eine Fluidleitung 172 zu einer Abzweigung der Fluidleitung 158. Schließlich führt der freie Anschluß des Dreiwegehahns 134d über eine Fluidleitung 174 zu einer Abzweigung der Fluidleitung 146.

Der quasikontinuierliche Betrieb wird dadurch möglich, daß die Dreiwegehähne 134a und 134b einerseits sowie 134c und 134d andererseits jeweils im Gegentakt umgeschaltet werden.

Fig. 6 zeigt eine Variante von Fig. 2 mit folgender Besonderheit:

Während bei der Ausführungsform gemäß Fig. 2 das Vorratsgefäß 56 eine Doppelfunktion hat, nämlich einerseits als Speicher für Wärmetauschfluid und andererseits als Warmwasserboiler, sind diese beiden Funktionen bei der Ausführungsform nach Fig. 6 in zwei gesonderte Bauelemente aufgeteilt, nämlich in das hier als Druckausgleichsgefäß dienende Vorratsgefäß 56 sowie einen selbständigen handelsüblichen Warmwasserboiler 176. Dieser ist hier ein normaler Wärmeverbraucher.

Wie bei handelsüblichen Warmwasserboilern üblich, ist dabei der Innenraum des Boilers über den Einlaß 60 und den Auslaß 62 in den Brauchwasserkreislauf einbezogen.

Die innerhalb des Boilers angeordnete Wärmetauscheinrichtung 58 ist hier nicht, wie in Fig. 2, mit Einlaß 60 und Auslaß 62, sondern mit den Dreiwegehähnen 100 und 104 verbunden.

Das freie Ende des Dreiwegehahns 104 ist über eine Fluidleitung 178 mit dem Vorratsgefäß 56 verbunden. Ein Dreiwegehahn 180 ist in die Fluidleitung 178 eingeschaltet und sein freier Anschluß führt zum Einlaß des Wärmeverbrauchers 69, dessen Auslaß in die Leitung 178 zurückführt. Je nach der Schaltung des Dreiwegehahnes 180 ist dabei der Dreiwegehahn 104 direkt oder über den Wärmeverbraucher 69 mit dem Vorratsgefäß 56 strömungsmäßig verbunden.

Der Auslaß des Vorratsgefäßes 56 führt über eine Fluidleitung 182, in welcher die Umwälzpumpe 70 eingeschaltet ist, zum Dreiwegehahn 108.

Während der weiterführende Anschluß dieses Dreiwegehahns 108 wie in Fig. 2 zu dem Ventil 68 führt, ist der freie Anschluß an eine weitere Fluidleitung 184 angeschlossen, die bis zum Einlaß 118 des druckfesten Kanalsystems 78b führt. In die Fluidleitung 184 ist ein Absperrventil 186 eingeschaltet.

**Patentansprüche**

1. Diskontinuierlich arbeitende Sorptions-Speichervorrichtung
   – mit einem wärmegedämmten Speicher, der ein gasdichtes Gehäuse aufweist und einen Feststoff als Sorptionsmittel enthält, das durch ein Heizmittel aufheizbar ist und in dem ein druckfestes Kanalsystem eingebettet ist,
   – mit einem wärmegedämmten Verdampfer, in dem ein druckfestes Kanalsystem angeordnet ist, und
   – mit einem Kondensator, in dem ein druckfestes Kanalsystem angeordnet ist,
   wobei die druckfesten Kanalsysteme Wärmetauscheinrichtungen in einem sekundären Wärmetauschfluidsystem mit Steuerungsorganen bilden,
   – und mit druckfesten Strömungsverbindungen für die Arbeitsmittel zwischen Verdampfer und Speicher, zwischen Kondensator und Speicher und zwischen Kondensator und Verdampfer, wobei der Kreislauf des Arbeitsmittels ein geschlossenes primäres System bildet, dadurch gekennzeichnet,
   daß der Speicher sowie der Kondensator und Verdampfer als getrennte, jeweils für sich wärmeisolierte Bauteile ausgebildet sind,
   daß diese Bauteile jeweils durch offene Strömungsverbindungen ohne Ventile oder dgl. untereinander verbunden sind, daß diese Strömungsverbindungen einen derart hohen Wärmewiderstand aufweisen, daß ein Wärmefluß zwischen den Bauteilen praktisch unterbunden ist und somit eine Wärmezu- oder -abfuhr zu diesen Bauteilen nur über das sekundäre System möglich ist, und daß die Steuerungsorgane derart vorgesehen sind, daß die Steuerung der Betriebsweise des primären Systems ausschließlich durch die Wärmezu- und -abfuhr über das sekundäre System erfolgt.

2. Sorptions-Speichervorrichtung nach Anspruch 1, dadurch gekennzeichnet, daß der Speicher in einer ersten Baueinheit und der Verdampfer/Kondensator in einer zweiten Baueinheit angeordnet sind.

3. Sorptions-Speichervorrichtung nach Anspruch 1, dadurch gekennzeichnet, daß der Speicher in einer ersten Baueinheit sowie der Verdampfer und der Kondensator in einer zweiten und in einer dritten Baueinheit angeordnet sind.

4. Sorptions-Speichervorrichtung nach Anspruch 2 oder 3, dadurch gekennzeichnet, daß das Gehäuse der ersten Baueinheit von einer Feststoff-Wärmetauscher-Funktionseinheit abgestützt ist.

5. Sorptions-Speichervorrichtung nach einem der Ansprüche 1 bis 4, gekennzeichnet durch eine im Feststoff eingebettete, von einem Aufheizfluid beaufschlagte Aufheiz-Wärmetauscheinrichtung.

6. Sorptions-Speichervorrichtung nach Anspruch 5, dadurch gekennzeichnet, daß die Aufheiz-Wärmetauscheinrichtung von der Wärmetauscheinrichtung im Speicher gesondert vorgesehen ist.

7. Sorptions-Speichervorrichtung nach Anspruch 5, dadurch gekennzeichnet, daß die Wärmetauscheinrichtung im Speicher zugleich als die Aufheiz-Wärmetauscheinrichtung vorgesehen ist.

8. Sorptions-Speichervorrichtung nach Anspruch 5, dadurch gekennzeichnet, daß die erste Wärmetauscheinrichtung im Speicher und die Aufheiz-Wärmetauscheinrichtung gesonderte Kanalsysteme, jedoch eine gemeinsame Verrippung aufweisen.

9. Sorptions-Speichervorrichtung nach einem der Ansprüche 1 bis 8, dadurch gekennzeichnet, daß mehrere Feststoff-Wärmetauscher-Funktionseinheiten parallelgeschaltet und mit demselben Verdampfer/Kondensator strömungsmäßig verbunden sind.

10. Sorptions-Speichervorrichtung nach Anspruch 9, dadurch gekennzeichnet, daß die verschiedenen Feststoff-Wärmetauscher-Funktionseinheiten wahlweise einschaltbar sind.

11. Sorptions-Speichervorrichtung nach Anspruch 9 oder 10, dadurch gekennzeichnet, daß verschiedene Feststoff-Wärmetauscher-Funktionseinheiten ein gemeinsames Gehäuse und eine gemeinsame Wärmedämmung aufweisen.

12. Sorptions-Speichervorrichtung nach einem der Ansprüche 9 bis 11, dadurch gekennzeichnet, daß verschiedene Feststoff-Wärmetauscher-Funktionseinheiten jeweils gesonderte Gehäuse und gesonderte Wärmedämmungen aufweisen.

13. Sorptions-Speichervorrichtung nach einem der Ansprüche 1 bis 12, dadurch gekennzeichnet, daß mindestens zwei Unter-Sorptions-Speichervorrichtungen in einem phasenversetzen Takt für eine quasikontinuierliche Betriebsweise gekoppelt sind.

14. Sorptions-Speichervorrichtung nach Anspruch 13 mit einer Gasheizeinrichtung, dadurch gekennzeichnet, daß die Sorptions-Speichervorrichtung als Fahrzeug-Klimaeinrichtung ausgebildet und die Gasheizeinrichtung von Kraftstoff-Verbrennungsgasen des Fahrzeugmotors oder einer eigenen Verbrennungseinrichtung beaufschlagbar ist.

15. Sorptions-Speichervorrichtung nach einem der Ansprüche 1, 2 und 4 bis 12, dadurch gekennzeichnet, daß die Wärmetauscheinrichtung im Verdampfer und Kondensator gesonderte Kanalsysteme für das Wärme abführende und für das Wärme zuführende Wärmetauschfluid aufweist.

16. Sorptions-Speichervorrichtung nach einem der Ansprüche 1 bis 15, dadurch gekennzeichnet, daß die Strömungsverbindungen kurz und aus einem schlecht wärmeleitenden Material ausgebildet sind.

17. Sorptions-Speichervorrichtung nach Anspruch 16, dadurch gekennzeichnet, daß das Material aus einem Glas- oder Keramik-Werkstoff besteht.

18. Sorptions-Speichervorrichtung nach einem der Ansprüche 1 bis 15, dadurch gekennzeichnet, daß die Strömungsverbindungen lang und aus einem dünnwandigen metallischen Material mit niedriger Wärmeleitfähigkeit ausgebildet sind.

19. Sorptions-Speichervorrichtung nach Anspruch 18, dadurch gekennzeichnet, daß das Material Chrom-Nickel-Stahl ist.

20. Sorptions-Speichervorrichtung nach einem der Ansprüche 1 bis 19, dadurch gekennzeichnet, daß als Wärme abführendes Wärmetauschfluid ein Fluid mit Phasenumwandlung flüssig - gasförmig, vorzugsweise Wasser, verwendet ist und daß eine Pumpeinrichtung zum Abpumpen von flüssigem Wärmetauschfluid vor Beginn der Desorptionsphase vorgesehen ist.

21. Sorptions-Speichervorrichtung nach Anspruch 20, dadurch gekennzeichnet, daß an der Ausgangsleitung der Wärmetauscheinrichtung im Speicher ein Belüftungsventil vorgesehen ist.

22. Sorptions-Speichervorrichtung nach einem der Ansprüche 1 bis 19, dadurch gekennzeichnet, daß als Wärme abführendes Wärmetauschfluid ein ständig flüssiges Fluid verwendet wird, das ständig die Wärmetauscheinrichtung im Speicher füllt.

23. Sorptions-Speichervorrichtung nach einem der Ansprüche 1, 2 und 4 bis 14 und 16 bis 22, wobei insbesondere die Zuleitung des in der Verdampfungsphase der Wärmetauscheinrichtung im Verdampfer und Kondensator Wärme zuführenden Wärmetauschfluids mit einem Kälteverbraucher strömungsmäßig verbunden ist, dadurch gekennzeichnet, daß das druckfeste Kanalsystem des Wärme abführenden Wärmetauschfluids der Wärmetauscheinrichtung im Speicher mit einem Wärmeverbraucher strömungsmäßig verbunden ist.

24. Sorptions-Speichervorrichtung nach einem der Ansprüche 1 und 3 bis 22, wobei insbesondere die Zuleitung des in der Verdampfungsphase dem Verdampfer Wärme zuführenden Wärmetauschfluids mit einem Kälteverbraucher strömungsmäßig verbunden ist, dadurch gekennzeichnet, daß das Kanalsystem des vom Kondensator Wärme abführenden Wärmetauschfluids mit einem Wärmeverbraucher strömungsmäßig verbunden ist.

25. Sorptions-Speichervorrichtung nach Anspruch 23 oder 24, dadurch gekennzeichnet, daß der Wärmeverbraucher eine Warmwasserheizung ist.

26. Sorptions-Speichervorrichtung nach einem der Ansprüche 1 bis 25, dadurch gekennzeichnet, daß das Kanalsystem des Wärme abführenden Wärmetauschfluids der Wärmetauscheinrichtung im Speicher mit einem Vorratsgefäß für das in flüssigem Zustand befindliche Wärmetauschfluid strömungsmäßig verbunden ist.

27. Sorptions-Speichervorrichtung nach Anspruch 26, dadurch gekennzeichnet, daß das Vorratsgefäß als Brauchwasser-Boiler ausgebildet ist.

28. Sorptions-Speichervorrichtung nach Anspruch 26 oder 27, gekennzeichnet durch eine zuschaltbare, das Vorratsgefäß überbrückende Bypassleitung für das von der Wärmetauscheinrichtung im Speicher Wärme abführende Wärmetauschfluid.

29. Sorptions-Speichervorrichtung nach einem der Ansprüche 1 bis 28, gekennzeichnet durch eine an das geschlossene Kanalsystem des Arbeitsmittels angeschlossene Gasabpumpeinrichtung, vorzugsweise eine Wasserstrahlpumpe.

30. Sorptions-Speichervorrichtung nach einem der Ansprüche 1 bis 29, gekennzeichnet durch eine an das geschlossene Kanalsystem des Arbeitsmittels angeschlossene Gasüberdruckventileinrichtung.

**Claims**

1. A discontinuously working sorption storage apparatus comprising
   - a thermally insulated storage device including a gastight housing and a solid as a sorbent which is adapted to be heated by a heating means and embedded in a pressure-proof duct system;
   - a thermally insulated evaporator in which a pressure-proof duct system is arranged; and
   - a condenser in which a pressure-proof duct system is arranged, said pressurproof duct systems forming heat exchange means in a secondary heat-exchange fluid system with control devices;
   - and pressure-proof flow communications for the working medium between evaporator and storage device, between condenser and storage device and between condenser and evaporator, the circuit of said working medium forming a closed primary system, characterized in that said storage device as well as said condenser and said evaporator are formed as separate, respectively thermally insulated elements, that said elements are respectively interconnected by open flow communications without valves, or the like, that said flow communications have such a great thermal resistance that heat flow between said elements is virtually prevented and heat supply or dissipation to said elements is thus only possible via said secondary system, and that said control devices are provided such that the operation of said primary system is exclusively controlled by the heat supply and dissipation via said secondary system.

2. A storage sorption apparatus according to claim 1, characterized in that said storage device is arranged in a first structural unit, and said evaporator/condenser are disposed in a second structural unit.

3. A sorption storage apparatus according to claim 1, characterized in that said storage device is arranged in a first structural unit, and said evaporator and said condenser are disposed in second and third structural units.

4. A sorption storage apparatus according to claim 2 or 3, characterized in that said housing of said first structural unit is supported by a solid heat-exchanger function unit.

5. A sorption storage apparatus according to any of claims 1 to 4, characterized by a heating heat-exchange means which is embedded in said solid and acted upon by a heating fluid.

6. A sorption storage apparatus according to claim 5, characterized in that said heating heat-exchange means is separated from said heat exchange means in said storage device.

7. A sorption storage apparatus according to claim 5, characterized in that said heat exchange means in said storage device is simultaneously provided as said heating heat-exchange means.

8. A sorption storage apparatus according to claim 5, characterized in that said heat-exchange means in said storage device and said heating heat-exchange means comprise separate duct systems, but a common ribbing.

9. A sorption storage apparatus according to any of claims 1 to 8, characterized in that a plurality of solid heat-exchanger function units are connected in parallel and are in flow communication with the same evaporator/condenser.

10. A sorption storage apparatus according to claim 9, characterized in that said plurality of solid heat-exchanger function units are selectively actuable.

11. A sorption storage apparatus according to claim 9 or 10, characterized in that said plurality of solid heat-exchanger function units have a common housing and a common thermal insulation.

12. A sorption storage apparatus according to any of claims 9 to 11, characterized in that each of said solid heat-exchanger function units has a separate housing and a separate thermal insulation.

13. A sorption storage apparatus according to any of claims 1 to 12, characterized in that at least two sub-sorption storage apparatuses are coupled in phase-shifted cycle for quasi-continuous operation.

14. A sorption storage apparatus according to claim 13 comprising a gas heating means, characterized in that said sorption storage apparatus is constructed as a vehicle airconditioning means and said gas heating means is adapted to be acted upon by fuel combustion exhaust gases of the vehicle engine or by an independent combustion means.

15. A sorption storage apparatus according to any of claims 1, 2 and 4 to 12, characterized in that said heat exchange means in said evaporator and condenser includes separate duct systems for the heat dissipating and the heat supplying heat-exchange fluids.

16. A sorption storage apparatus according to any of claims 1 to 15, characterized in that said flow communications have a short length and consist of a material of poor heat conduction.

17. A sorption storage apparatus according to claim 16, characterized in that said material consists of a glass or ceramic material.

18. A sorption storage apparatus according to any of claims 1 to 15, characterized in that said flow communications have a great length and consist of a thin-walled metallic material of low thermal conductivity.

19. A sorption storage apparatus according to claim 18, characterized in that said material is nickel-chromium steel.

20. A sorption storage apparatus according to any of claims 1 to 19, characterized in that a fluid with a liquidgaseous phase change, preferably water, is used as said heat dissipating heat-exchange fluid, and that a pump means is provided for pumping off liquid heat-exchange fluid prior to the beginning of the desorption phase.

21. A sorption storage apparatus according to claim 20, characterized in that a ventilating valve is provided at the outlet line of said heat exchange means in said storage device.

22. A sorption storage apparatus according to any of claims 1 to 19, characterized in that a permanently liquid fluid which constantly fills said heat exchange means in said storage device is used as said heat dissipating heat-exchange fluid.

23. A sorption storage apparatus according to any of claims 1, 2 and 4 to 14 and 16 to 22, especially the supply line of said heat-exchange fluid supplying heat in the evaporation phase to said heat exchange means in said evaporator and condenser being in flow communication with a cold consumer, characterized in that said pressure-proof duct system of said heat dissipating heat-exchange fluid of said heat exchange means in said storage device is in flow communication with a heat consumer.

24. A sorption storage apparatus according to any of claims 1 and 3 to 22, especially the supply line of said heat-exchange fluid supplying heat to said evaporator in the evaporation phase being in flow communication with a cold consumer, characterized in that said duct system of said heat-exchange fluid dissipating heat from said condenser is in flow communication with a heat consumer.

25. A sorption storage apparatus according to claim 23 or 24, characterized in that said heat consumer is a hot water heater.

26. A sorption storage apparatus according to any of claims 1 to 25, characterized in that said duct system of said heat dissipating heat-exchange fluid of said heat exchange means in said storage device is in flow communication with a supply vessel for said heat exchange fluid which is in its liquid state.

27. A sorption storage apparatus according to claim 26, characterized in that said supply vessel is constructed as a domestic water tank.

28. A sorption storage apparatus according to claim 26 or 27, characterized by a connectable bypass line which bridges said supply vessel and is intended for said heat exchange fluid which dissipates heat from said heat exchange means in said storage device.

29. A sorption storage apparatus according to any of claims 1 to 28, characterized by a gas pump-off means, preferably a water jet pump, which is connected to the closed duct system of said working medium.

30. A sorption storage apparatus according to any of claims 1 to 29, characterized by a gas overpressure valve means which is connected to said closed duct system of said working medium.

**Revendications**

1. Accumulateur à sorption à marche discontinue comprenant
   - un accumulateur calorifugé, equipé d'un boîtier étanche aux gas et contenant un solide comme agent de sorption qui peut être chauffé à l'aide d'une substance active, et dans lequel est incorporé un système de conduits résistants à la pression,

- un évaporateur calorifugé, dans lequel est installé un système de conduits résistants à la pression, et

- un condenseur, dans lequel est installé un système de conduits résistants à la pression, caractérisé en ce que les systèmes de conduits résistants à la pression constituent des dispositifs d'échange thermique dans un système secondaire de fluide d'échange thermique avec des organes de commande,

- et des raccords résistants à la pression pour la substance active entre évaporateur et accumulateur, entre condenseur et accumulateur et entre condenseur et évaporateur,-la circulation de la substance active constituant un système primaire fermé, caractérisé en ce que l'accumulateur ainsi que le condenseur et l'évaporateur sont des composants séparés, dont chacun est isolé à la chaleur, en ce que ces composants sont reliés mutuellement par des raccords ouverts, sans robinets ou analogue, en ce que ces conduits disposent d'une inertie thermique aussi importante qu'un flux thermique entre les composants est rendu pratiquement impossible et qu'ainsi seul le système secondaire permet une adduction de chaleur aux ou une dissipation de chaleur de ces composants et que les organes de commande sont prévus de sorte que la commande du mode de fonctionnement du système primaire est effectuée exclusivement par l'adduction ou la dissipation de chaleur par l'intermédiaire du système secondaire.

2. Accumulateur à sorption selon la revendication 1, caractérisé en ce que l'accumulateur est installé dans une première unité et l'évaporateur/condenseur dans une deuxième unité.

3. Accumulateur à sorption selon la revendication 1, caractérisé en ce que l'accumulateur est installé dans une première unité et que l'évaporateur et le condenseur sont installés dans une deuxième et une troisième unité.

4. Accumulateur à sorption selon la revendication 2 ou 3, caractérisé en ce que le boîtier de la première unité est supporté par un ensemble fonctionnel d'échange de chaleur de matière solide.

5. Accumulateur à sorption selon une des revendications 1 à 4, caractérisé en ce qu'il existe une installation d'echange de chaleur à chauffage incorporé dans un solide et sollicité par un fluide de chauffage.

6. Accumulateur à sorption selon la revendication 5, caractérisé en ce que l'installation d'échange de chaleur à chauffage est prévue à part de l'installation d'échange de chaleur dans l'accumulateur.

7. Accumulateur à sorption selon la revendication 5, caractérisé en ce que l'installation d'échange de chaleur dans l'accumulateur est prévue simultanément comme l'installation d'échange de chaleur à chauffage.

8. Accumulateur à sorption selon la revendication 5, caractérisé en ce que l'installation d'échange de chaleur dans l'accumulateur et l'installation d'échange de chaleur à chauffage présentent des systèmes de conduits séparés, mais une nervurage commune.

9. Accumulateur à sorption selon une des revendications 1 à 8, caractérisé en ce que plusieurs ensembles fonctionnels d'échange de chaleur de matière solide sont mis en parallèle et liés par conduits avec le même évaporateur/condenseur.

10. Accumulateur à sorption selon la revendication 9, caractérisé en ce que les divers ensembles fonctionnels d'échange de chaleur de matière solide peuvent être mis en marche au choix.

11. Accumulateur à sorption selon la revendication 9 ou 10, caractérisé en ce que plusieurs ensembles fonctionnels d'échange de chaleur de matière solide disposent d'un boîtier commun et d'une isolation thermique commune.

12. Accumulateur à sorption selon une des revendications 9 à 11, caractérisé en ce que plusieurs ensembles fonctionnels d'échange de chaleur de matière solide disposent de boîtiers et d'isolations thermiques séparées et à part.

13. Accumulateur à sorption selon une des revendications 1 à 12, caractérisé en ce qu'au moins deux sous-accumulateurs à sorption sont accouplés en période déphasée pour une marche quasi-continue.

14. Accumulateur à sorption selon la revendication 13 avec un dispositif de chauffage à gaz, caractérisé en ce que l'accumulateur à sorption se présente sous forme d'une installation de conditionnement d'air pour véhicules et que le dispositif de chauffage à gaz est sollicité par des gaz de la combustion de carburant du moteur du véhicule ou par une propre installation de combustion.

15. Accumulateur à sorption selon une des revendications 1, 2 et 4 à 12, caractérisé en ce que l'installation d'échange de chaleur dans l'évaporateur et dans le condenseur est équipée de systèmes de conduits séparés pour le fluid d'échange de chaleur qui dissipe la chaleur d'une part et pour celui qui amène la chaleur d'autre part.

16. Accumulateur à sorption selon une des revendications 1 à 15, caractérisé en ce que les conduits sont courts et d'une matière qui est mauvais thermo-conducteur.

17. Accumulateur à sorption selon la revendication 16, caractérisé en ce que la matière se compose de matériaux en verre ou en céramique.

18. Accumulateur à sorption selon une des revendications 1 à 15, caractérisé en ce que les conduits sont longs et d'une matière métallique à paroi mince avec une faible conductivité thermique.

19. Accumulateur à sorption selon la revendication 18, caractérisé en ce que la matière est acier chrome-nickel.

20. Accumulateur à sorption selon une des revendications 1 à 19, caractérisé en ce qu'on utilise comme fluide d'échange de chaleur dissipant la chaleur un fluide avec transition de phase liquide - gazeux, de préférence de l'eau, et qu'une installation de pompage pour évacuer le fluide d'échange de chaleur liquide, avant que ne commence la phase de desorption, est prévue.

21. Accumulateur à sorption selon la revendication 20, caractérisé en ce qu'un robinet de ventilation est prévu pour le conduit de sortie de l'installation d'échange de chaleur dans l'accumulateur.

22. Accumulateur à sorption selon une des revendications 1 à 19, caractérisé en ce qu'on utilise comme fluide d'échange de chaleur dissipant la chaleur un fluide toujours liquide, qui remplit de permanence l'installation d'échange de chaleur dans l'accumulateur.

23. Accumulateur à sorption selon une des revendications 1, 2 et 4 à 14 et 16 à 22, caractérisé en ce que la conduite d'amenée du fluide d'échange de chaleur amenant-, dans la phase d'évaporation-, de la chaleur à l'installation d'échange de chaleur dans l'évaporateur et dans le condenseur est reliée par conduits avec un consommateur de froid, caractérisé en ce que le système de conduits résistants à la pression du fluide d'échange de chaleur dissipant de la chaleur de l'installation d'échange de chaleur dans l'accumulateur est relié par conduits avec un consommateur de chaleur.

24. Accumulateur à sorption selon une des revendications 1 et 3 à 22, caractérisé en ce que la conduite d'amenée du fluide d'echange de chaleur amenant-, dans la phase d'évaporation-, de la chaleur à l'évaporateur est reliée par conduits avec un consommateur de froid, caractérisé en ce que le système de conduits du fluide d'échange de chaleur dissipant de la chaleur du condenseur est relié par conduits avec un consommateur de chaleur.

25. Accumulateur à sorption selon la revendication 23 ou 24, caractérisé en ce que le consommateur de chaleur est une chauffage à eau chaude.

26. Accumulateur à sorption selon une des revendications 1 à 25, caractérisé en ce que le système de conduits du fluide d'échange de chaleur dissipant de la chaleur de l'installation d'échange de chaleur dans l'accumulateur est relié par conduits avec un réservoir pour le fluide d'échange de chaleur en état liquide.

27. Accumulateur à sorption selon la revendication 26, caractérisé en ce que le reservoir est un ballon d'eau sanitaire et/ou industrielle.

28. Accumulateur à sorption selon la revendication 26 ou 27, caractérisé par un conduit à by-pass à utilisation optionnelle pontant le réservoir pour le fluide d'échange de chaleur dissipant de la chaleur de l'installation d'échange de chaleur dans l'accumulateur.

29. Accumulateur à sorption selon une des revendications 1 à 28, caractérisé par une installation d'evacuation de gaz par pompe, de préférence un éjecteur à eau, raccordée au système fermé des conduits de la substance active.

30. Accumulateur à sorption selon une des revendications 1 à 29, caractérisé par une installation à soupape de surpression de gaz raccordée au système fermé des conduits de la substance active.

FIG.1

FIG.2

EP 0 216 237 B1

FIG.3

FIG.4

EP 0 216 237 B1

EP 0 216 237 B1

FIG.5

FIG.6

EP 0 216 237 B1

FIG.7

EP 0 216 237 B1